# EUROPEAN PATENT APPLICATION

(11) **EP 1 602 864 A1**
(43) Date of publication of application: **07.12.2005**
(21) Application number: 04425412.6
(22) Date of filing: 03.06.2004
(51) Int. Cl.: F16J 15/02

(54) **Sealing device with shape memory means**

(71) Applicant: C.R.F. Società Consortile per Azioni, 10043 Orbassano (Torino) (IT)
(72) Inventor: Butera, Fancesco, 10100 Torino (IT); Alacqua, Stefano, 10090 Rivoli Cascine Vica (Torino) (IT)
(74) Representative: Notaro, Giancarlo

(57) **Abstract**

A sealing device (1) is constituted at least in part by a shape memory material and it is so arranged at to go into an expanded condition when its temperature passes through a predetermined threshold value, thereby obtaining an enhanced sealing effect, thanks to the matching of any settling of the parts between which the device is mounted, and thereby reducing or avoiding the risk of creep of the material constituting the sealing device or of non uniform contact pressure which may be generated by said settling.

## Description

The present invention relates, in general, to the field of sealing devices.

In some applications, such as that of the sealing rings provided in internal combustion engines to achieve gas tightness between the cylinder head and the engine block at each cylinder of the engine, a certain difficulty is encountered in providing sealing rings with a simple and economical structure that assure an effective degree of tightness. In the case of the specific application mentioned herein, typically single layer or multi-layer metallic sealing rings are used. Single layer rings are constituted by an appropriately shaped elastic lamination whilst multi-layer rings are constituted by a sheet metal element bent in such a way as to define a hollow cross section that contains within it elastic means tending to maintain the section of the ring in an expanded configuration. Said rings are dimensioned in such a way that when the cylinder head is assembled on the engine block, they are subjected to a crushing of their section. In the assembled condition, therefore, the aforesaid elastic means assure the contact pressure between the ring and the parts between which it is interposed, thereby assuring the seal. During the operation of the engine, in particular in sport applications, however, the pulses caused by combustion in the cylinders and the thermal stresses cause micrometric movements of the head relative to the engine block and creep phenomena on the sealing ring that lead to a temporary or permanent unloading of the aforesaid elastic means with consequent defective seal. Moreover, there are breaks in the uniformity of the contact pressure, due mainly to the non homogeneous complex geometry of the sealing surface. To try to overcome this drawback, multi-layer gaskets are used that return, insofar as possible, a constant reaction along the entire contact surface.

The object of the present invention is to provide a sealing device that is able to overcome said drawbacks and, more in general to assure a greater sealing certainty with respect to known devices, whilst having a simple and low cost structure.

In view of the achievement of this object, the invention relates to a sealing device in accordance with claim 1. According to an additional aspect, the invention also relates to an engine according to claim 6.

Shape memory alloys have long been known and used. The Applicant is the holder of various patents pertaining to different applications of shape memory materials. Said materials have the characteristic of being subjected to a dimensional variation when their temperature passes a predetermined threshold value.

In the case of the preferred embodiment of the present invention, a sealing ring is provided, comprising a deformable metallic body, having a hollow cross section and provided with shape memory means tending to recall said body towards the configuration with section of maximum dimension when its temperature exceeds a predetermined threshold value.

Preferably, also, the aforesaid shape memory means are constituted by spring means made of shape memory material positioned inside the cavity of the section of the annular body. For example, said spring can be constituted by a pack of sheet metal rings, at least partly with undulated section to assure an appropriate elastic deformability. As stated, regardless of the conformation of said spring means, they are constituted, at least in part, by a shape memory material, to that they tend to expand when their temperature exceeds a threshold value.

Therefore, returning to the specific case mentioned above of the seal for each engine cylinder between cylinder head and block, the seal is assured in optimal fashion, since during the operation of the engine the temperature rise causes the activation of the elastic shape memory means, which consequently assure the necessary contact pressure between the body of the sealing ring and the parts between which it is interposed and at the same they are able to match any settling of the head, avoiding sealing ring creep and non uniform contact pressure.

Therefore, it is possible for the transition temperature of the shape memory element to be pre-set at a lower level than the ambient temperature of operation of the engine, so that the shape memory element is already active in the inoperative condition of the engine.

Naturally, beyond said specific solution, the invention generally protects the principle of providing a sealing device having a deformable body provided with shape memory means which, as their temperature varies through a predetermined value, return the body of the sealing device to an expanded configuration. This concept, therefore, generally applies to any sealing device for any specific application. The shape memory means can be separate elements associated to the body of the sealing device, as mentioned above, but it is also possible for the body of the sealing device to be constituted at least in part by a shape memory material.

Additional characteristics and invention of the invention shall become readily apparent from the description that follows with reference to the accompanying drawings, in which:
Figure 1 is a schematic section view of the upper part of a cylinder and of an internal combustion engine,
Figure 2 is a partial perspective view of a first embodiment of a sealing ring according to the invention,
Figure 3 is a section view according to the line III-III of Figure 2,
Figures 4-8 show variants of Figure 3, and
Figure 9 is a section view of an additional variant.

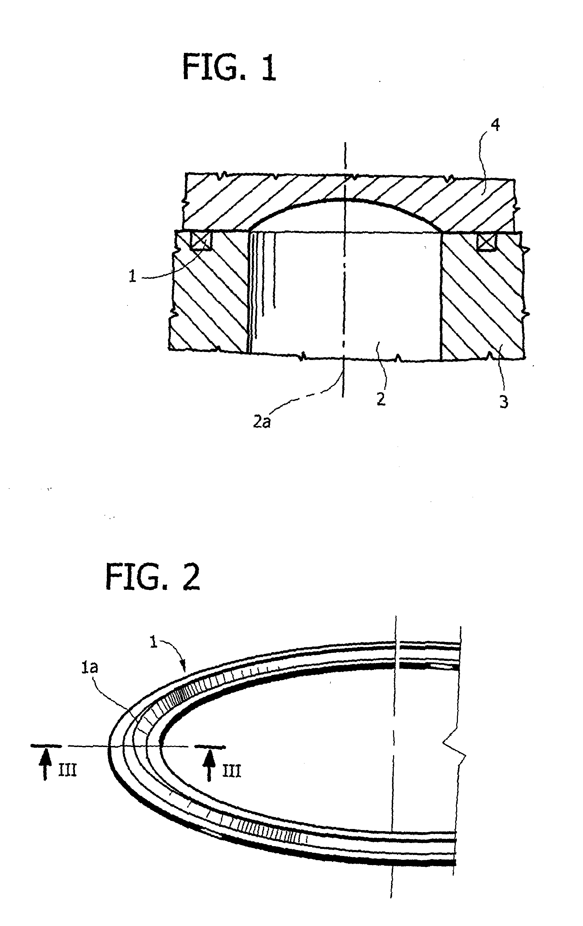

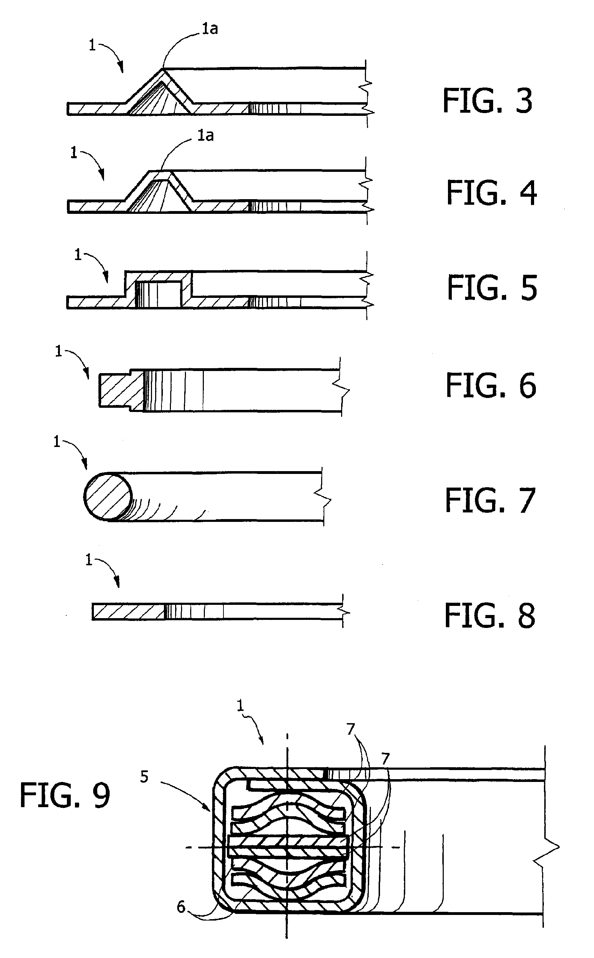

In Figure 1, the reference number 1 designates a sealing ring according to the invention, used to provide a seal for the gases that are developed in a cylinder 2 of an internal combustion engine. The ring 1 is interposed between the engine block 3 of an internal combustion engine and the cylinder head 4. In accordance with the prior art, the head 4 is fastened to the block 3 by means of fastening screws (not shown). The sealing ring 1 according to the invention can be, for example, in the form of a flattened annular lamination, as shown in Figures 2, 3, with a central rib 1a having triangular profile with sharp edge, or having the shape of Figure 4, in which the edge of the rib is chamfered and possibly rounded, or any one of the shapes shown in Figures 5-8, or yet others.

In all the cases illustrated in said figures, the device is constituted by a single annular element. Figure 3 shows a multi-layer sealing device where inside a hollow annular body 5, constituted by bent metal plate, is positioned a pack of rings made of metal plate 7, whereof at least some are made of shape memory metallic alloy, possibly together with elements made of traditional material. At least part of the rings 7 are in the form of undulated laminations in order to be elastically compressible as a result of a crushing of the ring in the vertical direction (with reference to the drawing, i.e. in the direction of the axis of the ring).

The vibrations whereto the cylinder head is subjected during the operation of the engine do not compromise the assurance of the seal. During the operation of the engine, the heat generated by combustion causes such a temperature rise as to cause the shape memory sealing element to exceed the transition temperature whereat the shape memory elements tend to expand, returning to its expanded configuration. In this way, a contact pressure is assured between the sealing ring 1 and the parts between which it is interposed, that is sufficient to assure the seal in any operating condition. As stated, it would also be possible to set the threshold temperature of the shape memory element so that it is already activated at normal ambient temperature.

As is readily apparent from the above description, the basic concept of the present invention is to associate to a sealing device, such as a sealing ring of the type described above, shape memory means that are able to return the return the sealing device to an expanded configuration when the temperature of said device passes a predetermined threshold value.

Naturally, without altering the principle of the invention, the construction details and the embodiments may vary widely from what is described and illustrated purely by way of example herein.

In particular, the invention is also applicable to different sealing rings from those illustrated by way of example herein, whatever their specific application and whatever their conformation. At least in theory, the sealing means could be constituted by one or more multi-material rings with at least one of said rings constituted in part by shape memory material. For example, one or more of the shape memory rings illustrated in the figures can be coated by an elastomer in order to constitute a single multi-material ring.

## Claims

1. A sealing device (1) **characterised in that** it comprises at least one shape memory element (1, 6, 7) able to go into an expanded condition when its temperature passes through a predetermined threshold value, in order to enhance the sealing effect, thanks to the matching of any settling of the parts (3, 4) between which the device (1) is mounted, and thereby reducing or avoiding the risk of creep of the material constituting the sealing device or of non uniform contact pressure which may be generated by said settling.

2. Sealing device as claimed in claim 1, **characterised in that** said sealing device is in the form a sealing ring and comprises at least one annular element (1) at least partially constituted by shape memory material.

3. Sealing device as claimed in claim 2,
**characterised in that** said sealing ring (1) has a cross section with a shape selected between square, circular, rectangular, flattened with central rib, preferably said rib being with triangular or square profile.

4. Sealing device as claimed in claim 2,
**characterised in that** said sealing ring (1) comprises a hollow and deformable annular body (5), whereto are associated one or more shape memory elements (6, 7).

5. Sealing device as claimed in claim 4,
**characterised in that** inside said hollow annular body (5) is positioned a pack of annular plates (6, 7), at least part of which are undulated plates, deformable as a result of an axial compression and at least part of which is constituted by shape memory material.

6. Sealing device as claimed in claim 1,
**characterised in that** said threshold temperature is pre-set to a value that is reached only during the operation of the apparatus whereon said sealing device is mounted.

7. Sealing device as claimed in claim 1,
**characterised in that** said threshold temperature is pre-set to a value that is lower than the normal ambient temperature in which operates an apparatus whereon said sealing device is mounted, so that said device tends to go into its expanded condition already in the inoperative condition of said apparatus.

8. Internal combustion engine, comprising an engine block (3) in which is formed at least one cylinder (2), a head (4) fastened to the engine block (3) and an annular sealing device (1) surrounding the cylinder and interposed between engine block (3) and head (4), **characterised in that** said sealing device is as claimed in one or more of the previous claims.

9. Internal combustion engine as claimed in claim 8, **characterised in that** said threshold temperature is pre-set to a value that is reached during the operation of the engine.

10. Internal combustion engine as claimed in claim 8, **characterised in that** said threshold temperature is pre-set to a value that is pre-set to a value that is lower than the normal ambient temperature in which the engine operates, so that said device tends to go into its expanded condition already in the inoperative condition of the engine.
